# EUROPEAN PATENT APPLICATION

(11) **EP 4 685 190 A1**
(43) Date of publication of application: **28.01.2026**
(21) Application number: 24190569.4
(22) Date of filing: 24.07.2024
(51) Int. Cl.: C08L 77/06, C08G 69/26

(54) **POLYAMIDE COMPOSITION AND ARTICLES PREPARED THEREFROM**

(71) Applicant: Evonik Operations GmbH, 45128 Essen (DE)
(72) Inventor: KOERDT, Maximilian, 48249 Dülmen (DE); DANKE, Varun, 40597 Düsseldorf (DE); KLEIN, Andreas, 42109 Wuppertal (DE); GENSHEIMER, Marco, 47051 Duisburg (DE)
(74) Representative: Evonik Patent Association

(57) **Abstract**

The present disclosure relates to a polyamide composition comprising a) a cycloaliphatic polyamide; b) an acid modified polymer; and c) an amine modified polymer. Also disclosed is a method to prepare the composition and an article prepared from the polyamide composition.

## Description

### Field of the present disclosure

The present disclosure relates to a polyamide composition and to articles prepared from the same.

### Background

Transparent polymers were widely used as a replacement for glass. Polyamides, with their chemical and thermal stability, good processability, and mechanical strength, are among candidates for various applications, such as, optical applications including lenses, windows, coverings, etc.

The market desires polyamide compositions with good handling, high transparency, and high mechanical strength. In the past, the transmittance and mechanical strength could be tuned by addition of auxiliaries or additives, such as, inorganic fillers, impact modifiers and/or compatibilizers. However, it was observed that the additives may enhance one set of performances while sacrificing another set. Thus, polyamide compositions with a delicate balance of performances, especially the balance of high transmittance, less yellow color, and high impact strength, are demanded.

Published European application EP2778190 disclosed a polyamide molding material in which an impact modifier in the form of maleic acid anhydride modified styrene-ethylene/butylene-styrene block copolymer, was introduced to the polyamide composition. The use of MAH modification leads to a higher yellow index, which is not desired in end applications such as light-transmitting components.

The polyamide mixtures of the art may have a transmittance which depends on the temperature. Thus, it is possible that mixtures are transparent at room temperature (23 °C) while haze at 100 °C can be determined. The haze effect is not reversible; a transparent polyamide, once exposed to too high temperature, will lose its transparent characteristics.

Some transparent polyamides on the other hand do not show significant deviation in transparency and haze at temperature of 100 °C and remain transparent.

### Summary of the present disclosure

It is one objective of the present disclosure to provide a polyamide composition which maintains its transparent characteristics at room temperature although exposed to higher temperatures. In other words, the transmittance shall be unaffected by thermos-cyclic load.

Such objective is achieved by providing a polyamide composition comprising, based on a total weight of the polyamide composition, a cycloaliphatic polyamide; an acid modified polymer; and an amine modified polymer.

The haze of polyamide composition according to the invention, especially articles made of it, is therefore temperature-dependent. Haze appearing at higher temperatures than room temperature is reversible; after cooling of the composition the composition will be transparent again.

In a preferred embodiment the transmittance at 23 °C of the polyamide composition is at most 2 % lower, preferably at most 1 % lower, than the transmittance at 23 °C before heating the composition to 100 °C in one temperature cycle in accordance with the examples.

Preferably, the amine modified polymer has at least comonomer selected from ethylene, propylene, 1-butylene, 2-butylene, butadiene, and styrene.

Preferably, the acid modified polymer has at least one first comonomer selected from ethylene, propylene, 1-butylene, 2-butylene, butadiene, and styrene and at least one second comonomer selected from maleic anhydride, itaconic anhydride, or citraconic anhydride.

Preferably, the amine modified polymer has a weight percentage of 3 wt.% to 20 wt.%, more preferably 4 wt.% to 18 wt.%, based on the total weight of the polyamide composition.

Preferably, the acid modified polymer has a weight percentage of 0.5 wt.% to 3.8 wt.%, more preferably 1 wt.% to 3.5 wt.%, based on the total weight of the polyamide composition.

In a preferred embodiment of the invention the sum amount of weight percentage of amine modified polymer and of acid modified polymer is 0.5 wt.% to 23.5 wt.%, more preferably 5 wt.% to 21.5 wt.%, based on the total weight of the polyamide composition.

Preferably, the polyamide composition has a transmittance of at least 80%, preferably at least 85%, more preferably at least 88%, and even more preferably at least 90%, measured according to ASTM D1003 at 23 °C.

Preferably, a refractive index of the amine modified polymer is within a range of 1.51 to 1.52 measured according to DIN EN ISO 489:1999 by Method A.

Preferably, a refractive index of the acid modified polymer is within a range of 1.51 to 1.52 measured according to DIN EN ISO 489:1999 by Method A. More preferably, the refractive index of both amine modified polymer and acid modified polymer is within a range of 1.51 to 1.52.

Preferably, the polyamide is selected from the group consisting of: a cycloaliphatic polyamide based on a cycloaliphatic diamine having 10-20 carbon atoms and an aliphatic dicarboxylic acid having 8-18 carbon atoms and optionally an aromatic di-carboxylic acid having 8-18 carbon atoms.

Preferably, the polyamide is selected from the group consisting of (b1) polyamide (PA MACM12) made of bis(3-methyl-4-aminocyclohexyl)methane and dodecanedioic acid; or (b2) polyamide (PA PACM12) made of bis(4-aminocyclohexyl)methane and dodecanedioic acid; or (b3) polyamide (PA MACM10) made of bis(3-methyl-4-aminocyclohexyl)methane and decanedioic acid; or (b4) polyamide (PA PACM10) made of bis(4-aminocyclohexyl)methane and decanedioic acid; or (b5) polyamide (PA MACM14) made of bis(3-methyl-4-aminocyclohexyl)methane and tetradecanedioic acid; or (b6) polyamide (PA PACM14) made of bis(4-aminocyclohexyl)methane and tetradecanedioic acid; or any mixture or copolymer thereof.

Preferably, a test piece produced from the polyamide composition has an impact strength no less than 60kJ/m², preferably 70 kJ/m² measured according to ISO 179.

The composition may contain common additives like stabilizers, pigments, plasticizers, fillers, processing aids.

Another aspect of the invention is a method for producing the above-described inventive polyamide composition. The method comprises the step of admixing a polyamide, an acid modified polymer and an amine modified polymer to obtain the polyamide composition. Acid modified polymer and amine modified polymer can be added to the polyamide subsequently or simultaneously. In addition, the modified polymers can be admixed in dry blend.

Another perspective of the present disclosure is to provide an article prepared from the polyamide composition.

Another aspect of the invention is the use of the above described polyamide composition in optical applications, decoration foils, protective foils, sensors. In this applications the reversible effect of temperature-depending haze is useful.

### Detailed description

The polyamide composition according to the present disclosure comprises a polyamide, an acid modified polymer, and an amine modified polymer. The polyamide composition maintains its transparent characteristics at room temperature although exposed to higher temperatures.

The polyamide composition may be processed into articles by melting and moulding by processes known to those skilled in the art such as selective laser sintering, composite filament fabrication, selective heat sintering, fusion deposition modelling, fused filament fabrication, injection moulding, extrusion, pressing, or rolling.

The articles may be in used in one of the following sectors: electrical equipment, sports items, optical equipment, sanitary and hygiene items, household equipment, communications technology, automobile technology, energy and drive technology, mechanical engineering, protective eyewear, protective shields, housings, or medical equipment.

### In the figures

Figure 1 is a picture from a first polymer composition E1 in accordance with the invention at 100 °C (left) and 23 °C (right).
Figure 2 is a picture from a second polymer composition E2 in accordance with the invention at 100 °C (left) and 23 °C (right).
Figure 3 is a picture from a third polymer composition E3 in accordance with the invention at 100 °C (left) and 23 °C (right).

The figures demonstrate polyamide plates with haze at 100 °C; after cooling down to 23 °C the transmittance increases.

### Polyamide

The polyamide used in the present disclosure may include at least one selected from the group consisting of:
a cycloaliphatic polyamide based on a cycloaliphatic diamine having 10-20 carbon atoms and an aliphatic dicarboxylic acid having 8-18 carbon atoms and optionally an aromatic di-carboxylic acid having 8-18 carbon atoms.

The polyamide composition according to the present disclosure preferably has a transmittance of at least 80%, preferably at least 85%, more preferably at least 90%, and even more preferably at least 95%, measured according to ASTM D1003 at 23 °C.

### Cycloaliphatic polyamide

The cycloaliphatic polyamide is preferably based on a cycloaliphatic diamine having 10-20 carbon atoms and an aliphatic dicarboxylic acid having 8-18 carbon atoms and optionally an aromatic di-carboxylic acid having 8-18 carbon atoms.

More preferably, the polyamide is selected from the group consisting of:
- polyamide (PA MACM12) made of bis(3-methyl-4-aminocyclohexyl)methane and dodecane-dioic acid,
- polyamide (PA PACM12) made of bis(4-aminocyclohexyl)methane and dodecanedioic acid,
- polyamide (PA MACM10) made of bis(3-methyl-4-aminocyclohexyl)methane and decanedioic acid,
- polyamide (PA PACM10) made of bis(4-aminocyclohexyl)methane and decanedioic acid,
- polyamide (PA MACM14) made of bis(3-methyl-4-aminocyclohexyl)methane and tetradecanedioic acid,
- polyamide (PA PACM14) made of bis(4-aminocyclohexyl)methane and tetradecanedioic ac-id, and any mixture or copolymer thereof.

The nomenclature used here for the polyamides is in accordance with EN ISO 1874-1. Accordingly, PA PACMX describes a polyamide composed of monomer units which derive from bis(4-aminocyclohexyl)methane (PACM) and a linear dicarboxylic acid having X carbon atoms. According to the invention said linear dicarboxylic acid having X carbon atoms may be:
X = 8: octanedioic acid (suberic acid);
X = 9: nonanedioic acid (azelaic acid);
X = 10: decanedioic acid (sebacic acid);
X = 11: undecanedioic acid;
X = 12: dodecanedioic acid;
X = 13: tridecanedioic acid (brassylic acid);
X = 14: tetradecanedioic acid;
X = 15: pentadecanedioic acid;
X = 16: hexadecanedioic acid;
X = 17: heptadecanedioic acid; and
X = 18: octadecanedioic acid.

The PA PACMX is typically produced from PACM and the dicarboxylic acid by polycondensation in the melt according to known processes. However, derivatives thereof may also be employed, for example the diisocyanate which derives from PACM, or a dicarboxylic diester.

PACM exists as a mixture of cis, cis, cis, trans and trans, trans isomers. It is commercially available with various isomer ratios. In one preferred embodiment the trans, trans isomer content of the PACM or of the employed derivative thereof is 10 to 70 wt.%, more preferably 30 to 70 wt.% and particularly preferably from 35 to 65 wt.%, based on the total content of PACM.

It is particularly preferable when the PA PACMX is a PA PACM12 in which the trans, trans isomer content of the PACM or of the employed derivative thereof is 30 to 70 wt-% and especially preferably 35 to 65 wt-%, based on the total content of PACM.

### Acid modified polymer

Acid modified polymers refer to a family of copolymers that are resultants of acid functionalization of a base polymer. The acid modified polymers may be prepared from a base polymer and an unsaturated acid or anhydride as a functionalizing agent through an acid modification process. This acid modification may be carried out by grafting a base polymer with unsaturated carboxylic acids and/or unsaturated carboxylic acid derivatives. Preferably, a carboxylic acid or a carboxylic acid derivative selected from the group consisting of unsaturated carboxylic esters and unsaturated carboxylic anhydrides is used. The conditions under which the grafting of the base polymer proceeds are well known to a skilled person. Acid modified polymer contains carboxylic groups or anhydride groups in the macromolecule introduced by the modification process.

The unsaturated carboxylic acid is a carboxylic acid with at least one unsaturated carbon-carbon bond. Preferably, the unsaturated carboxylic acid is one or more selected from acrylic acid, methacrylic acid, alpha ethylacrylic acid, maleic acid, fumaric acid, itaconic acid, citraconic acid, aconitic acid, tetrahydrophthalic acid, or butenylsuccinic acid.

The unsaturated carboxylic ester is an ester of an unsaturated carboxylic acid. Preferably, the unsaturated carboxylic ester is one or more selected from esters of acrylic acid, methacrylic acid, alpha ethylacrylic acid, maleic acid, fumaric acid, itaconic acid, citraconic acid, aconitic acid, tetrahydrophthalic acid, or butenylsuccinic acid.

The unsaturated carboxylic anhydride is an anhydride of an unsaturated dicarboxylic acid. Preferably, the unsaturated carboxylic anhydride is one or more selected from maleic anhydride, itaconic anhydride, or citraconic anhydride.

The base polymers may include a homopolymer or copolymer. The homopolymer or copolymer may be an addition polymer or a condensation polymer. With regards to the addition polymer, it may have at least one monomer or comonomer selected from ethylene, propylene, butylene, styrene, butadiene, any other olefin, (meth)acrylic acid, an alkyl (meth)acrylate, (meth)acrylamide, or (meth)acrylonitrile. With regards to the condensation polymer, it may include one or more selected from polyethers, polyesters, polycarbonates, polyurethanes, polyureas, polyamides, phenol-aldehyde resins, epoxy resins, polysiloxanes, etc. The base polymers may include, for instance, polyethylene (PE), polypropylene (PP), or styrene-ethylene-butylene-styrene copolymer (SEBS).

Exemplary acid modified polymer has at least one first comonomer selected from ethylene, propylene, 1-butylene, 2-butylene, butadiene, and styrene and at least one second comonomer selected from maleic anhydride, itaconic anhydride, or citraconic anhydride.

As an example, acid modified polymers include polyethylene-graft-maleic anhydride, maleic anhydride-grafted PE, maleic anhydride-grafted PP, styrene-maleic anhydride copolymer, maleic anhydride-methyl methacrylate copolymer, maleic anhydride grafted SEBS, or maleic anhydride-acrylamide copolymer.

According to the present disclosure, the degree of functionalization is 0.5 wt.% to 2.5 wt.%, preferably 1.0 wt.% to 2.0 wt.%, more preferably 1.2 wt.% to 1.8 wt.%, based on the total content of acid modified polymer.

The acid modified polymer may have a refractive index similar to that of the polyamide. Preferably, the refractive index of the acid modified polymer is within a range of 1.51 to 1.52.

It is observed in the present disclosure that acid modified polymer, when added into polyamide composition, could enhance the mechanical strength and optical performance, especially impact strength and transmittance, respectively. Without bound by any theory, acid modified polymer contains terminal carboxylic groups, which may react with unreacted amino groups in the polyamide during processing. Thus, acid modified polymer might achieve a high compatibility with polyamide. However, some acid modified polymers, such as maleic anhydride modified styrene-ethylene-butylene-styrene block copolymer (MAH-SEBS), may cause visible yellowing of the resultant polyamide composition.

### Amine modified copolymer

It was unexpectedly found in the present disclosure that amine modified polymers, when being used as modifiers, could introduce suppressed yellowing and good transmittance to the polyamide composition.

The amine modified polymers are a family of copolymers that have amino end groups. The amine modified copolymers may be prepared from a base polymer according to methods known to a skilled person. Exemplary methods include, nitration followed by reduction, condensation followed by hydrogenation, direct amination, etc.

The base polymers may include a homopolymer or copolymer. The homopolymer or copolymer may be an addition polymer or a condensation polymer. With regards to the addition polymer, it may have at least one monomer or comonomer selected from ethylene, propylene, butylene, styrene, butadiene, any other olefin, (meth)acrylic acid, an alkyl (meth)acrylate, (meth)acrylamide, or (meth)acrylonitrile. With regards to the condensation polymer, it may include one or more selected from polyethers, polyesters, polycarbonates, polyurethanes, polyureas, polyamides, phenol-aldehyde resins, epoxy resins, polysiloxanes, etc.

As an example, the amine modified polymer includes amine-modified polystyrene-poly(ethylene/butylene)block-polystyrene (amine-modified SEBS).

The amine modified polymer may have a reflex index similar to that of the polyamide. Preferably, the amine modified polymer has a reflex index within a range of 1.51 to 1.52.

The present disclosure is illustrated by way of example and comparative example hereinbelow.

### Materials and Testing

The following materials were employed in the examples:
TROGAMID myCX high flow from Evonik Corporation is a microcrystalline polyamide (PACM12) produced from bis(4-aminocyclohexyl)methane having a content of trans, trans-stereoisomer of 48% and also dodecanedioic acid; ηrel = 1.8.

Tuftec^{™} M1913 from Asahi Kasei Corporation is a maleic anhydride modified SEBS thermoplastic elastomer. It is used as a compatibilizer of polar resins or an impact modifier of engineering plastics such as polyamide and polyester.

Tuftec^{™} MP10 from Asahi Kasei Corporation is an amine modified styrene ethylene butadiene styrene (SEBS) thermoplastic elastomer with a polystyrene content of 30%.

The transmittance and haze were measured according to ASTM D1003 using Haze-gard i (BYK) on injection molded 2 mm plates.

### Examples

All polyamide compositions were mixed using a Coperion ZSK-26cm co-rotating twin screw extruder, discharged, pelletized to obtain the polymer composites according to the recipe indicated in Table 1. The polyamides were fed into the main port of extruder and then mixed at 280°C, and the modifiers were fed simultaneously into the extruder.

The polymer compositions in pellet form were processed on an injection moulding machine Engel VC 650/200 (melt temperature 280°C; mould temperature 60°C) to prepare specimens for mechanical performance tests and optical tests. The specimen had a dimension of 60 mm x 60 mm x 2 mm.

The specimen was heated in a convention oven from 23 °C to 100 °C for 30 min. Afterwards the specimen was cooled in water to 23 °C (thermos-cyclic load). This procedure was iterated three times. After each temperature cycle the transmittance as measured.

**Table 1 Test results of specimens prepared from examples**

| | | **E1** | **E2** | **E3** |
|---|---|---|---|---|
| TROGAMID | | 93 | 88 | 83 |
| M1913 | | 2 | 2 | 2 |
| MP10 | | 5 | 10 | 15 |
| before heating | Haze / % | 9.4 | 8.5 | 8.1 |
| | Transmittance / % | 91.6 | 91.4 | 90.5 |
| After cycle 1 | Haze / % | 13.1 | 13.2 | 8.8 |
| | Transmittance / % | 91 | 90.7 | 90.1 |
| After cycle 2 | Haze / % | 14 | 12.6 | 11 |
| | Transmittance / % | 91 | 90.7 | 89.5 |
| After cycle 3 | Haze / % | 13.6 | 13.7 | 10.1 |
| | Transmittance / % | 90.9 | 90.6 | 89.8 |

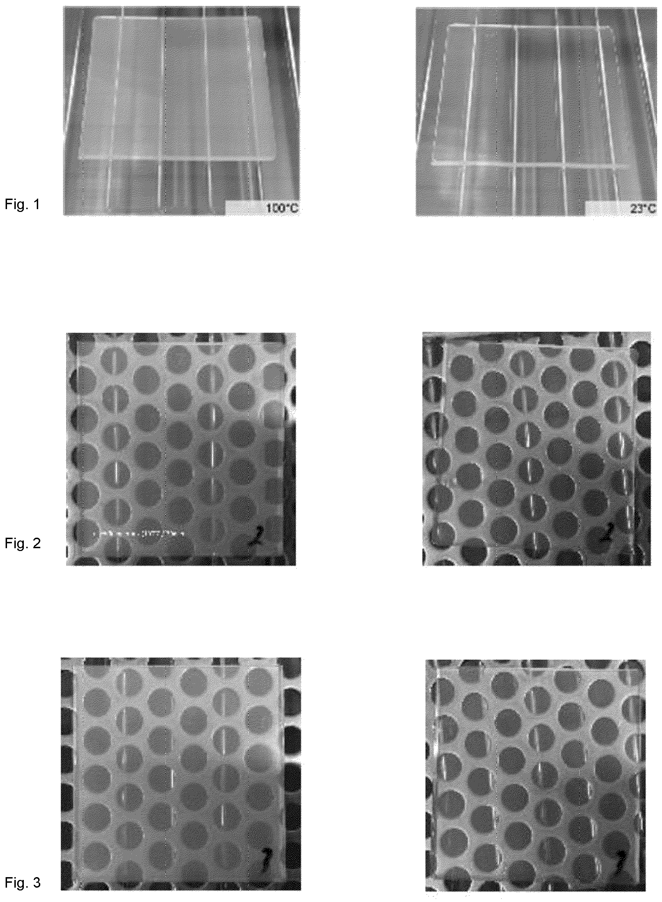

It could be optically observed that the transmittance of the specimen decreased with rising temperature (cf. Fig. 1-3): The pictures were made during (left pictures) and after (right pictures) cycle 2, respectively. In each case the transmittance was decreased at a temperature of 100 °C while it increased after cooling down to 23 °C. After finalizing each thermo-cyclic load the transmittance increased again and achieved an amount similar to the one before rinsing temperature of the previous thermos-cyclic load.

Various aspects and embodiments are possible. Some of those aspects and embodiments are described herein. After reading this specification, skilled artisans will appreciate that those aspects and embodiments are only illustrative and do not limit the scope of the present disclosure.

## Claims

1. A polyamide composition comprising, based on a total weight of the polyamide composition:
at least one cycloaliphatic polyamide;
an acid modified polymer; and
an amine modified polymer.

2. The polyamide composition according to Claim 1, wherein the transmittance at 23 °C is at most 2 % lower than the transmittance at 23 °C before heating the composition to 100 °C in one temperature cycle in accordance with the examples.

3. The polyamide composition according to claim 1, wherein the transmittance at 23 °C is at most 1 % lower than the transmittance at 23 °C before heating the composition to 100 °C in one temperature cycle in accordance with the examples.

4. The polyamide composition according to any of the preceding claims, wherein the amine modified polymer has at least one comonomer selected from ethylene, propylene, 1-butylene, 2-butylene, butadiene, and styrene.

5. The polyamide composition according to any of the preceding claims, wherein the acid modified polymer has at least one first comonomer selected from ethylene, propylene, 1-butylene, 2-butylene, butadiene, and styrene and at least one second comonomer selected from maleic anhydride, itaconic anhydride, or citraconic anhydride.

6. The polyamide composition according to any of the preceding claims, wherein the amine modified polymer has a weight percentage of 3 wt.% to 20 wt.%, preferably 4 wt.% to 18 wt.%, based on the total weight of the polyamide composition.

7. The polyamide composition according to any of the preceding claims, wherein the acid modified polymer has a weight percentage of 0.5 wt.% to 3.8 wt.%, preferably 1 wt.% to 3.5 wt.%, based on the total weight of the polyamide composition.

8. The polyamide composition according to any of the preceding claims, wherein the sum amount of weight percentage of amine modified polymer and of acid modified polymer is 3.5 wt.% to 23.5 wt.%, based on the total weight of the polyamide composition

9. The polyamide composition according to any of the preceding claims, wherein the polyamide composition has a transmittance of at least 80 %, preferably 88%, more preferably 90%, measured according to ASTM D1003 at 23 °C.

10. The polyamide composition according to any of the preceding claims, wherein a refractive index of the amine modified polymer or of the acid modified polymer is within a range of 1.51 to 1.52 measured according to DIN EN ISO 489:1999 by Method A.

11. The polyamide composition according to any of the preceding claims, wherein the cycloaliphatic polyamide is selected from the group consisting of:
a cycloaliphatic polyamide based on a cycloaliphatic diamine having 10-20 carbon atoms and an aliphatic dicarboxylic acid having 8-18 carbon atoms and optionally an aromatic dicarboxylic acid having 8-18 carbon atoms.

12. The polyamide composition according to any of the preceding claims, wherein the polyamide is selected from the group consisting of
(b1) polyamide (PA MACM12) made of bis(3-methyl-4-aminocyclohexyl)methane and dodecanedioic acid; or
(b2) polyamide (PA PACM12) made of bis(4-aminocyclohexyl)methane and dodecanedioic acid; or
(b3) polyamide (PA MACM10) made of bis(3-methyl-4-aminocyclohexyl)methane and decanedioic acid; or
(b4) polyamide (PA PACM10) made of bis(4-aminocyclohexyl)methane and decanedioic acid; or
(b5) polyamide (PA MACM14) made of bis(3-methyl-4-aminocyclohexyl)methane and tetradecanedioic acid; or
(b6) polyamide (PA PACM14) made of bis(4-aminocyclohexyl)methane and tetradecanedioic acid; or any mixture or copolymer thereof.

13. Method for producing a polyamide composition according to any of the preceding claims by admixing the polyamide, the acid modified polymer and the amine modified polymer.

14. An article prepared from the polyamide composition according to any of the claims 1 to 12.

15. Use of polyamide compositions according to claims 1 to 12 in optical applications, decoration foils, protective foils, sensors.
